# EUROPÄISCHE PATENTSCHRIFT

(11) **EP 1 105 715 B1**
(45) Veröffentlichungstag und Bekanntmachung des Hinweises auf die Patenterteilung: **07.12.2016**
(21) Anmeldenummer: 99924971.7
(22) Anmeldetag: 14.05.1999
(51) Int. Cl.: G01N 21/85, G01N 21/27, B07C 5/342

(54) **VERFAHREN UND VORRICHTUNG ZUR DETEKTION UND UNTERSCHEIDUNG ZWISCHEN KONTAMINATIONEN UND GUTSTOFFEN SOWIE ZWISCHEN VERSCHIEDENEN FARBEN IN FESTSTOFFPARTIKELN**
METHOD AND DEVICE FOR DETECTING AND DIFFERENTIATING BETWEEN CONTAMINATIONS AND ACCEPTS AS WELL AS BETWEEN DIFFERENT COLORS IN SOLID PARTICLES
PROCEDE ET DISPOSITIF POUR DETECTER ET DIFFERENCIER DES CONTAMINATIONS ET DES MATIERES, AINSI QUE DIFFERENTES TEINTES DANS DES PARTICULES SOLIDES

(43) Veröffentlichungstag der Anmeldung: 13.06.2001
(73) Patentinhaber: Krieg, Gunther, Prof.Dr.Ing., 76227 Karlsruhe (DE)
(72) Erfinder: KRIEG, Gunther, 76227 Karlsruhe (DE); FEY, Dirk, 76199 Karlsruhe (DE); BOHLEBER, Jürgen, 77815 Bühl (DE); DAUSCH, Manfred, 76831 Göcklingen (DE)
(74) Vertreter: Patent- und Rechtsanwälte Ullrich & Naumann
(86) Internationale Anmeldenummer: PCT/EP1999/003325
(87) Internationale Veröffentlichungsnummer: WO 2000/070331

(56) Entgegenhaltungen:
- EP-A- 0 345 949
- WO-A-93/11403
- WO-A-96/06689
- WO-A-98/33058
- DE-A- 19 816 881
- US-A- 3 062 965
- US-A- 3 545 610
- US-A- 4 600 105
- US-A- 4 636 074
- US-A- 4 976 540

## Beschreibung

Die Erfindung betrifft ein Verfahren zur Detektion und zur Unterscheidung der Grundmaterialien, der Farben und der Kontaminationen in granulatähnlichen oder tablettenförmigen Stoffen sowie eine Vorrichtung zur Detektion und zur Unterscheidung der Grundmaterialien, der Farben und der Kontaminationen in granulatähnlichen oder tablettenförmigen Stoffen.

In zahlreichen technischen on-line-Prozessen ist die Kontrolle der Produktqualität bzw. der Farbe ein wesentliches Qualitätskriterium. So ist beispielsweise bei der Herstellung von Kunststoffbehältern, insbesondere von Kunststoffflaschen für die Getränkeindustrie, unter Verwendung von granuliertem Recycling-Material, die Trennung und Sortierung verschiedener Farbfraktionen, verschiedener Kunststofftypen, z.B. Polyethylen, Polyamid, Polyvinylchlorid, die Erkennung und Aussortierung von beispielsweise mit Benzin, Diesel, Benzol, Toluol, Xylol kontaminierten Bruchstücken erforderlich, um einen Wiedereinsatz, z.B. in der Lebensmittelindustrie, zu ermöglichen. Um dieses Ziel zu erreichen, müssen die wiederverwertbaren reinen Grundmaterialien von kontaminierten Granulaten unterschieden und separiert werden können. Darüber hinaus müssen die verschieden gefärbten Bruchstücke in farbreine Fraktionen sortiert werden.

Diese vielschichtige und komplexe Aufgabe konnte von den Verfahren und Vorrichtungen gemäß dem Stand der Technik nur in Teilbereichen und nur unbefriedigend gelöst werden. So sind Vorrichtungen bekannt geworden, die unter Einsatz von CCD-Farbkameras eine Farberkennung mit anschließender Farbsortierung durch Einsatz von gesteuerten Luftstrahldüsen ermöglichen. Diese Systeme weisen jedoch die Nachteile zu geringer Messgeschwindigkeiten und zu niedriger Signal/Rausch-Verhältnisse auf und sind daher für den hier vorgesehenen prozesstechnischen Einsatz nicht geeignet. Darüber hinaus wurden gemäß dem Stand der Technik Entwicklungen zur Identifikation und Trennung verschiedener Kunststoffe vorangetrieben. Die dabei eingesetzten Verfahren eignen sich jedoch nicht für die Lösung entsprechender Aufgabenstellungen an Granulaten oder granulatähnlichen Bruchstücken aus Recyclat, da bei der hier beabsichtigten Identifikation und Sortierung von mehr oder weniger zerkleinerten Flaschen, Behältern, etc. etwa um den Faktor 1000 höhere Messgeschwindigkeiten gefordert werden, um den aus Wirtschaftlichkeitsgründen vorgegebenen Mindestmassenstrom zu bewältigen. Erschwerend kommt hinzu, dass sowohl für die Farberkennung als auch für die Stoffunterscheidung jeweils eigene Systeme mit unterschiedlichen physikalischen Prinzipien, d.h. CCD-Kameras für die Farberkennung bzw. NIR-Absorption für die Kunststoffklassifizierung, benötigt werden, deren Gesamtkosten über dem wirtschaftlich vertretbaren Kostenlimit pro Anlage liegen. Als größter Nachteil erweist sich jedoch die Tatsache, dass keine der oben genannten Methoden den Nachweis von Kontaminationen durch Fremdstoffe, die in dem Basismaterial eingelagert wurden, ermöglicht. Letzteres ist jedoch z.B. im Rahmen des Recyclings von lebensmitteltechnologisch genutzten Kunstsoffen, die mehrfach als Lebensmittelbehälter genutzt werden sollen, eine unumgängliche Forderung.

Die EP 345 949 A2 offenbart ein Verfahren und eine Vorrichtung zum Detektieren eines schmalen Frequenzbandes einer Strahlung zur Untersuchung von Objekten oder Gegenständen, insbesondere von Edelsteinen, wie Diamanten. Es soll dabei eine Gegenstandsart von anderen Gegenstandsarten getrennt werden. Demgemäß wird das schmale Raman-Emissionsband des fraglichen Objekts über einen nur dieses hindurch lassenden Filter mittels eines Fotomultipliers erfasst, der nur das gesamte auf ihn fallende Licht wellenunspezifisch verstärkt, wodurch eben der Filter erforderlich ist. Soweit Strahlleiter vorgesehen sind, dienen diese lediglich dazu, Umgebungslicht in schmalbandigen Bereichen nahe der Raman-Linie zu detektieren, um dieses von dem bei der Raman-Linie empfangenen Signal, das ebenfalls einen Umgebungslichtanteil enthält, eliminieren zu können.

Die WO 98/33058 A1 betrifft ein nicht gattungsgemäßes Verfahren zur Online-Analyse von polyzyklischen aromatischen Hydrocarbonverbindungen in Aerosolen:

Die US 4,636,074 zeigt eine optische Anordnung zur Verwendung in der Spektrometrie bei lichtemittierendem Plasma kleinster Emissionsvolumen.

Ziel und Aufgabenstellung der vorliegenden Erfindung sind daher, ein neuartiges Verfahren bzw. Vorrichtungen vorzuschlagen, die neben einer Farbidentifikation und einer Stoffklassifizierung eine Identifikation der Kontaminationen im Basismaterial ermöglichen, wobei aus Wirtschaftlichkeitsgründen nur ein einziges physikalisches Grundprinzip zur simultanen Lösung von insgesamt drei Problemkreisen zugelassen ist.

Die vorliegende Erfindung löst die Aufgabe mit einem Verfahren mit den Merkmalen des Anspruchs 1 sowie mit einer Vorrichtung mit den Merkmalen des Anspruchs 4. Die vorliegende Erfindung löst die drei Problemstellungen in der Weise, dass das auf einem Transportband bewegte Recycling-Granulat von einem Laser beleuchtet und die vom Granulat reemittierte Strahlung in einem breiten Spektralbereich spektroskopisch analysiert wird. Darüber hinaus sind erfindungsgemäß Maßnahmen vorgesehen, die eine flächendeckende Erfassung und Auswertung der Spektren zur Ermittlung der Farben, der Basismaterialien und der Kontaminationen der Granulate in Echtzeit ermöglichen.

Die Erfindung wird in den nachstehend aufgeführten Figuren 1 bis 9 näher erläutert. Dazu zeigen
- Figur 1:: Den prinzipiellen Aufbau des Gesamtsystems zur on - line - Erkennung und Sortierung unterschiedlich gefärbter, kontaminierter und aus verschiedenen Grundmaterialien bestehenden Granulaten bzw. Tabletten
- Figur 2:: Die optische Anordnung zur Beleuchtung des Meßgutes und zur Erfassung der vom Meßgut reemittierten Strahlung mittels eines Polygonspiegelrades und eines Toroidalspiegels
- Figur 3:: Die optische Anordnung zur Beleuchtung des Meßgutes und zur Erfassung der vom Meßgut reemittierten Strahlung einzig über ein Polygonspiegelrad
- Figur 4:: Die Seitenansicht eines wesentlichen Teils der in Figur 2 dargestellten optischen Anordnung
- Figur 5:: Der Aufbau des zur Strahlenablenkung eingesetzten Toroidalspiegels
- Figur 6:: Eine ausgewählte Anordnung der Sensorik und Signalverarbeitung zur ultraschnellen Auswertung der optischen Signale
- Figur 7:: Ein Beispiel für Emissionsspektren zur Farberkennung und Farbselektion
- Figur 8:: Ein Beispiel für Emissionsspektren zur Stofferkennung
- Figur 9:: Ein Beispiel für Emissionspektren zur Erkennung von Kontaminationen

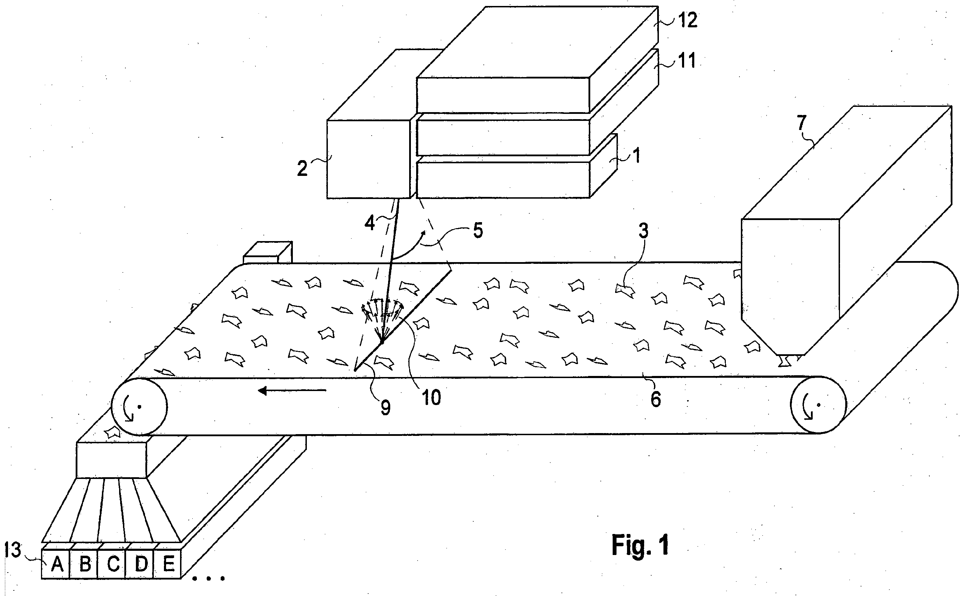

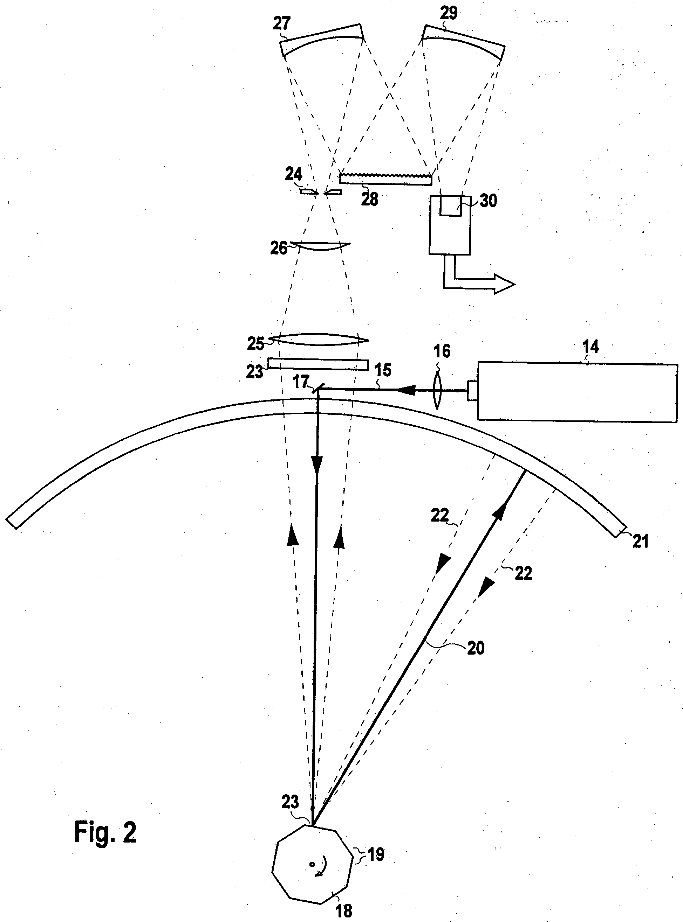

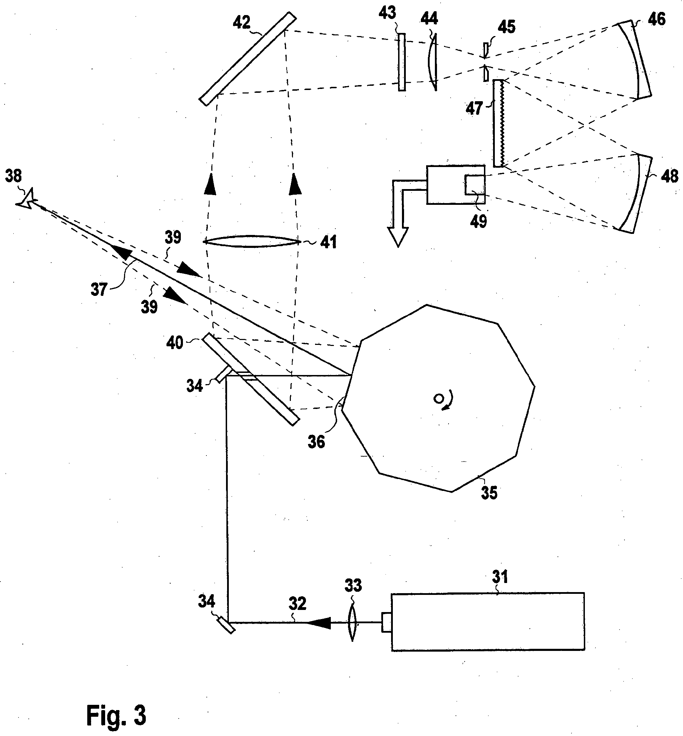

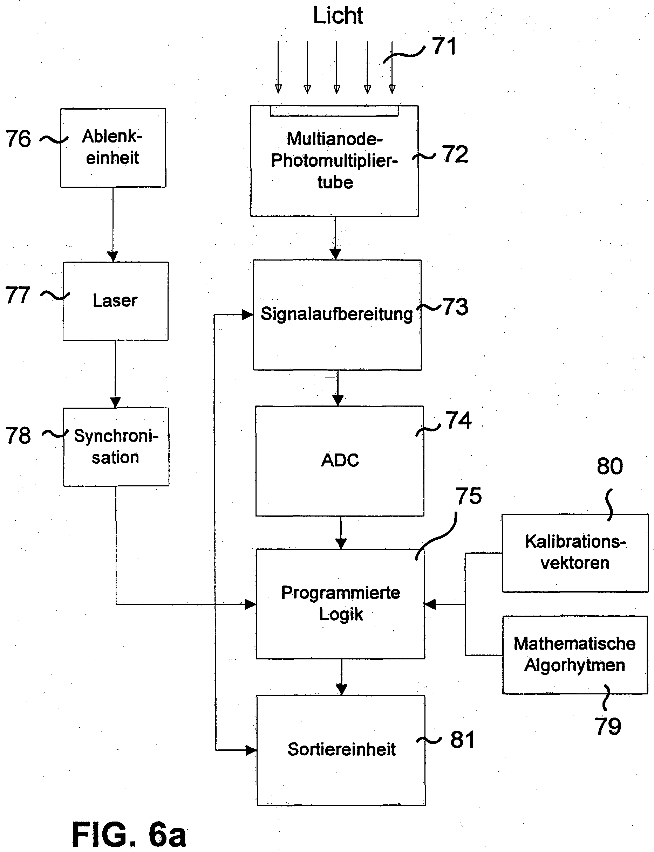

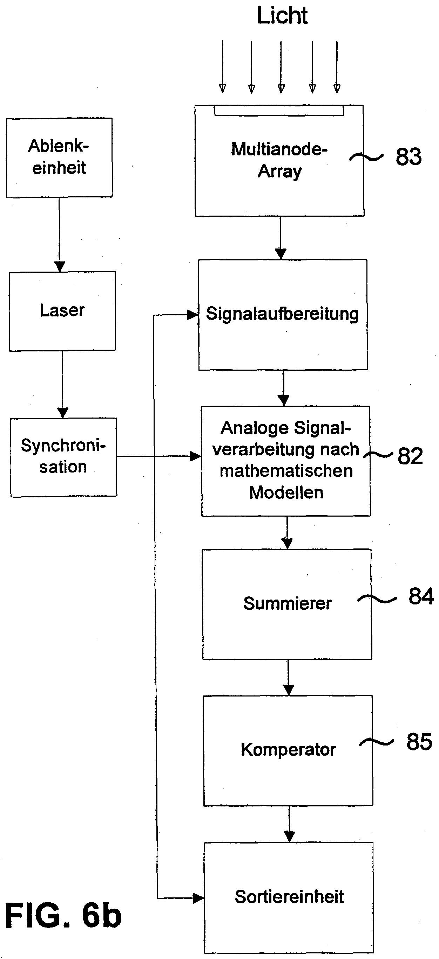

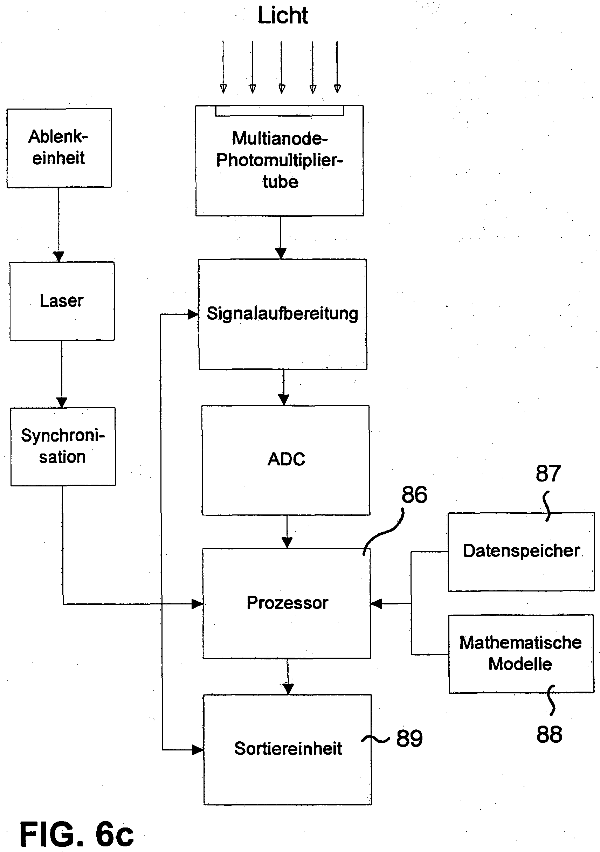

Gemäß Figur 1 wird der Strahl eines Lasers (1) von einem in Figur 2 oder Figur 3 näher beschriebenen optischen System (2) zeilenförmig über das Meßgut (3) geführt. Der Laserstrahl (4) überstreicht den gesamten Winkelbereich (5) zwecks Erfassung der Gesamtbreite des Transportbandes (6), welches über ein Silo (7) mit Granulatmaterial (3) bzw. über eine nicht näher gezeigte Beschickungseinrichtung mit Tabletten oder anderen Prüflingen versorgt wird. Die Beleuchtung der Prüflinge (3) erfolgt punktweise (9) durch Taktung des Laserlichtes. Alternativ kann durch Einsatz eines kontinuierlich strahlenden Lasers (1) auch eine zeilenförmige Abtastung realisiert werden. Das durch Streuung, Fluoreszenz, Laser - Raman - Streuung, Reflexion und andere optische Reemissions Effekte erzeugte Sekundärlicht (10) wird von dem optischen System (2) in einem weiten Winkelbereich erfaßt und einem Spektrometer (11) zugeführt, dessen Signale von einer in Figur 6 beispielhaft dargestellten Auswertungseinheit (12) verarbeitet werden. Die dadurch bewirkte Klassifizierung der Prüflinge (3) in einzelne Farbklassen, getrennte Stoffklassen und in Kontaminanten führt durch ein Separationssystem gemäß dem Stand der Technik, z.B. über getaktete Düsen, zu einer Sortierung in verschiedene, getrennte Fraktionen (13), die in dieser Form einem anderen Herstellungsprozeß oder im Falle der Kontaminanten einem Entsorgungssystem zugeführt werden können.

Figur 2 zeigt den Laser (14), dessen Strahl (15) nach Kollimation durch eine Linse (16) und Umlenkung über einen Reflektor (17) auf ein Polygonrad (18) trifft. Die Stirnflächen (19) des mit hoher Winkelgeschwindigkeit rotierenden Polygon rades (18) sind als Spiegel ausgebildet und führen den Laserstrahl (20) azimuthal in Form einer zeitlichen Sägezahnbewegung über den dreidimensional geformten Toroidalhohlspiegel (21), der eine zeilenförmige Laserstrahlabtastung (9) des Prüfgutes (3) auf dem Transportband (6) gemäß Figur 1 bewirkt. Das entsprechend Figur 1 divergent reemittierte Licht (10) wird ebenfalls vom Toroidalspiegel (21) erfaßt, in ein konvergentes Strahlbündel (22) transformiert und am Laserauftreffpunkt (23) reflektiert, um in das im oberen Teil von Figur 1 gezeigte Spektrometer (11) zu gelangen. Am Eingang des Spektrometers befindet sich ein optisches Filter (23), welches Falschlicht ausblendet, das aus der Strahlung des Lasers (14) stammt, welche beispielsweise an den Oberflächen von optischen Komponenten, wie z.B. der Linse (16), reflektiert wird und auf Umwegen in das Spektrometer gelangen würde. Das optische Filter (23) ist also so ausgelegt, daß es die Emissionswellenlängen des Lasers (14) unterdrückt. Letztere liegen vorzugsweise bei Emissionswellenlängen des YAG - Lasers, d.h. bei 1046nm und deren frequenzvervielfachten Wellenlängen von 523nm, 349nm und 262nm.

Das auf den Spalt (24) des Spektrometers mittels der Linsen (25,26) fokussierte Licht gelangt über einen ersten Hohlspiegel (27) auf das optische Gitter (28), welches die Lichtstrahlung in seine Wellenlängenanteile spektral zerlegt und über einen zweiten Hohlspiegel (29) auf das Sensorsystem (30) wellenlängenabhängig abbildet. Das Sensorsystem (30) besteht z.B. aus einer CCD - Zeile. Alternativ werden je nach zu untersuchendem Spektralbereich lineare Arrays aus Si - Photodioden oder Si - Photoelementen eingesetzt oder entsprechende Anordnungen aus In Ga As verwendet. Eine speziell ausgebildete Sensorsystemanordnung unter Einsatz von Photomultiplier - Arrays ist in Figur 6 näher dargestellt.

Figur 3 zeigt den Laser (31), dessen Strahl (32) nach Kollimation durch eine Linse (33) und Umlenkung über die Reflektoren (34) auf den Spiegel (36) des Polygonrads (35) trifft. Die Stirnflächen (36) des mit hoher Winkelgeschwindigkeit rotierenden Polygonrades (35) sind als Spiegel ausgebildet und führen den Laserstrahl (37) azimuthal in Form einer zeitlichen Sägezahnbewegung direkt auf das Messgut (38). Dies führt gemäß Figur 1 zu eine zellenförmige Laserstrahlabtastung (9) des Prüfgutes (3) auf dem Transportband (6). Das entsprechend Figur 1 divergent reemittierte Licht (10) wird durch den Spiegel (36) erfaßt, reflekiert, um über eine Linse (41) und Spiegel (42) in das im oberen Teil von Figur 1 gezeigte Spektrometer (11) zu gelangen. Am Eingang des Spektrometers befindet sich ein optisches Filter (43), welches Falschlicht ausblendet, das aus der Strahlung des Lasers (31) stammt, welche beispielsweise an den Oberflächen von optischen Komponenten, wie z.B. der Linse (33), reflektiert wird und auf Umwegen in das Spektrometer gelangen würde. Das optische Filter (43) ist also so ausgelegt, daß es die Emissionswellenlängen des Lasers (31) unterdrückt. Letztere liegen vorzugsweise bei Emissionswellenlängen des YAG - Lasers, d.h. bei 1046nm und deren frequenzvervielfachten Wellenlängen von 523nm, 349nm und 262nm.

Das auf den Spalt (45) des Spektrometers mittels der Linse (44) fokussierte Licht gelangt über einen ersten Hohlspiegel (46) auf das optische Gitter (47), welches die Lichtstrahlung in seine Wellenlängenanteile spektral zerlegt und über einen zweiten Hohlspiegel (48) auf das Sensorsystem (49) wellenlängenabhängig abbildet. Das Sensorsystem (49) besteht z.B. aus einer CCD - Zeile. Alternativ werden je nach zu untersuchendem Spektralbereich lineare Arrays aus Si - Photodioden oder Si - Photoelementen eingesetzt oder entsprechende Anordnungen aus In Ga As verwendet. Eine speziell ausgebildete Sensorsystemanordnung unter Einsatz von Photomultiplier - Arrays ist in Figur 6 näher dargestellt.

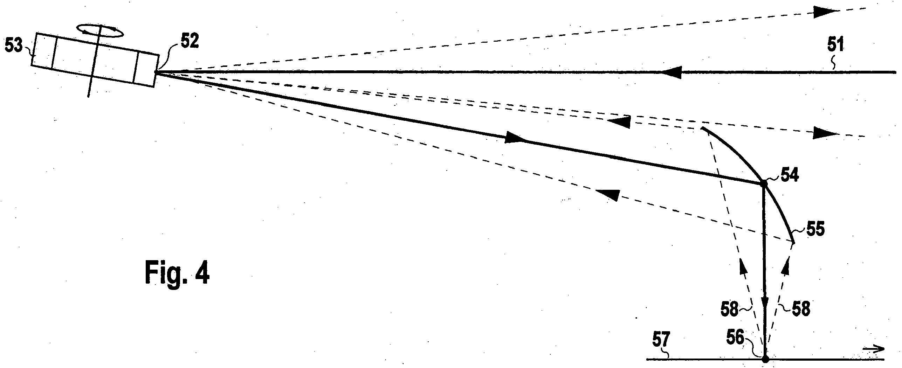

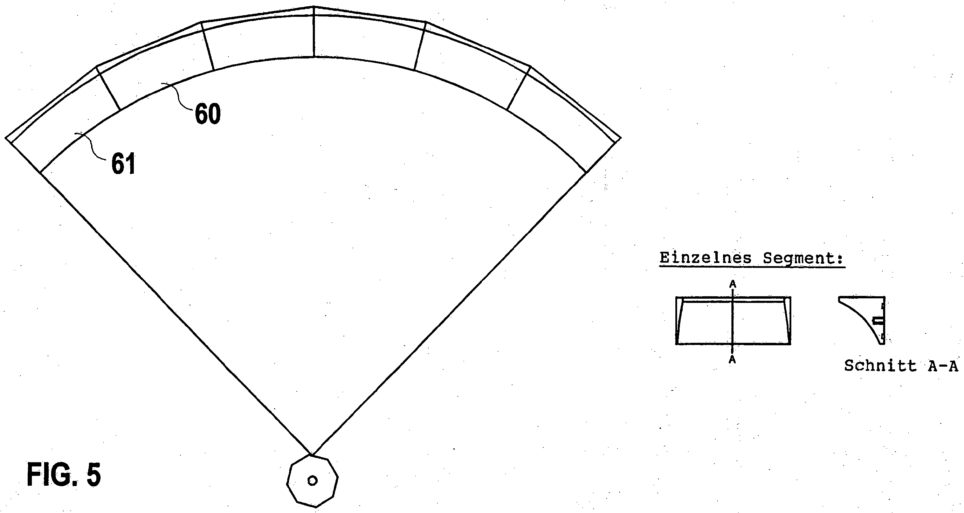

Ein wesentlicher Teil der optischen Anordnung aus Figur 2 ist in Figur 4 in der Seitenansicht dargestellt. Sie zeigt nochmals den Laserstrahl (51) und seinen Auftreffpunkt (52) auf den Reflektorflächen des Polygonrades (53), seine Reflexion (54) auf dem Toroidalspiegel (55) sowie seinen Auftreffpunkt (56) auf dem Transportband (57). Darüber hinaus ist der Strahlengang (58) der vom Granulat bzw. von der jeweiligen Tablette reemittierten Strahlung (58), welcher koaxial und entgegengesetzt zum Laserstrahl (51) verläuft, wiedergegeben. Diese spezielle erfindungsgemäße Strahlführung von anregendem Laserstrahl (51) und reemittiertem Strahl (58) wird insbesondere durch Einsatz des Toroidalspiegels (55) erreicht, der in den Schnittebenen der Figuren 2 und 4 jeweils unterschiedliche Krümmungsradien aufweist. Um den erforderlichen Winkelbereich der reemittierten Strahlung erfassen zu können, ist ein Toroidalspiegel erforderlich, dessen Abmessung im Bereich von 1,5 m x 0,3 m liegen. Aus herstellungstechnischen Gründen wird der Spiegel aus Einzelsegmenten (60, 61) gemäß Figur 5 hergestellt.

Gemäß Figur 6a wird das spektral zerlegte Licht (71) von einer Multianoden Photomultiplier - Röhre (72) erfaßt. Über eine Signalaufbereitung (73) und einen Analog-/Digital-Converter (74) gelangt das jeweilige Spektrum auf eine programmierte Logik (75), die in Synchronisation mit der in den Figuren 2, 3 und 4 gezeigten optischen Ablenkeinheit (76), dem Laser (77) und einer speziellen Synchronisationseinheit (78) sowie mathematischen Algorithmen (79) in Kombination mit extern berechneten Kalibrationsvektoren (80), die Stoffidentifikation, die Farbbestimmung und die Detektion von Kontaminationen bewirkt und entsprechende Befehle an die Sortiereinheit (81) weiterleitet.

Fig. 6b, die nicht Teil der Erfindung ist, zeigt eine weitere Variante der Signalauswertung, bei der die programmierte Logik (75) in Fig. 6a durch eine analoge Signalverarbeitung nach mathematischen Modellen (82) ersetzt ist. Dabei werden die einzelnen Signalkanäle der Multianoden-Photomultiplier-Röhre (83) parallel über analoge Schaltungselemente gemäß dem jeweils vorgegebenen mathematischen Modell verarbeitet. Ein nachgeschalteter Summierer (84) addiert die Signalinhalte aller parallelen Kanäle zu einem einzigen resultierenden Signal, welches von einem Komparator (85) in die Kategorien: Kontamination bzw. alternativ in die jeweilige Stoffklasse mit Farbe, klassifiziert wird.

Bei der dritten Variante der Signalauswertung wird gemäß Fig. 6c ein Prozessor (86) eingesetzt, der die aktuell gemessenen Spektren mit den in einem Datenspeicher (87) abgelegten Referenzspektren vergleicht, beurteilt und entsprechende Befehle an die Sortiereinheit (89) weiterleitet.

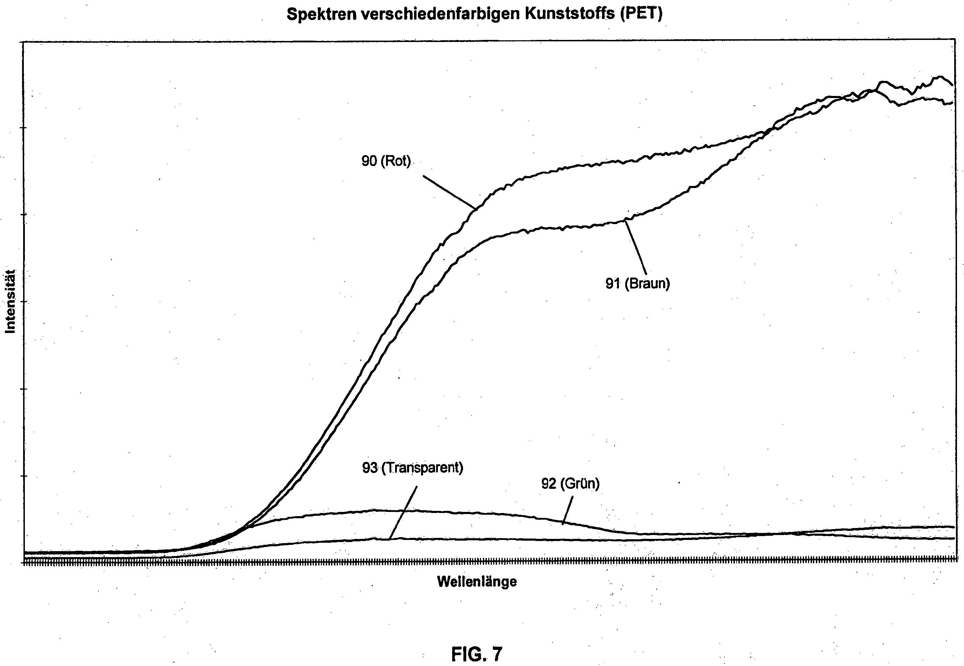

Fig. 7 zeigt die Farberkennung nach dem erfindungsgemäßen Verfahren für verschieden eingefärbte PET-Materialien in Form unterschiedlicher Spektren für die Farben rot (90), braun (91), grün (92) und transparent (93). Man sieht, dass eine eindeutige Farbunterscheidung mögich ist.

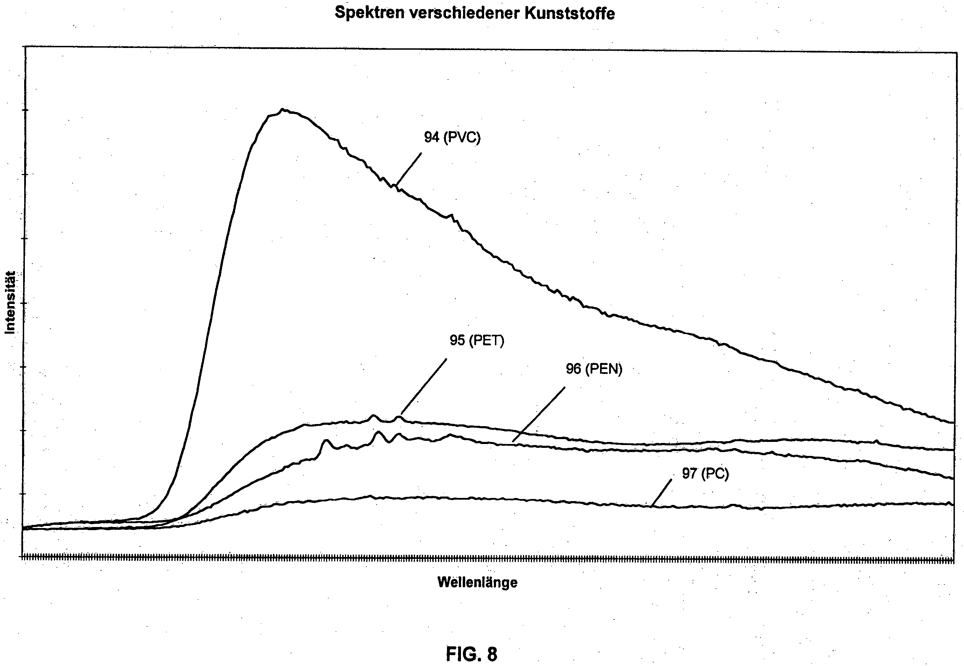

Fig. 8 fasst die Spektren unterschiedlicher Stoffe aus den Grundmaterialien PVC (94), PET (95), PEN (96) und PC (97) zusammen, die sich ebenfalls durch klar unterschiedliche, charakteristische Kurvenformen unterscheiden.

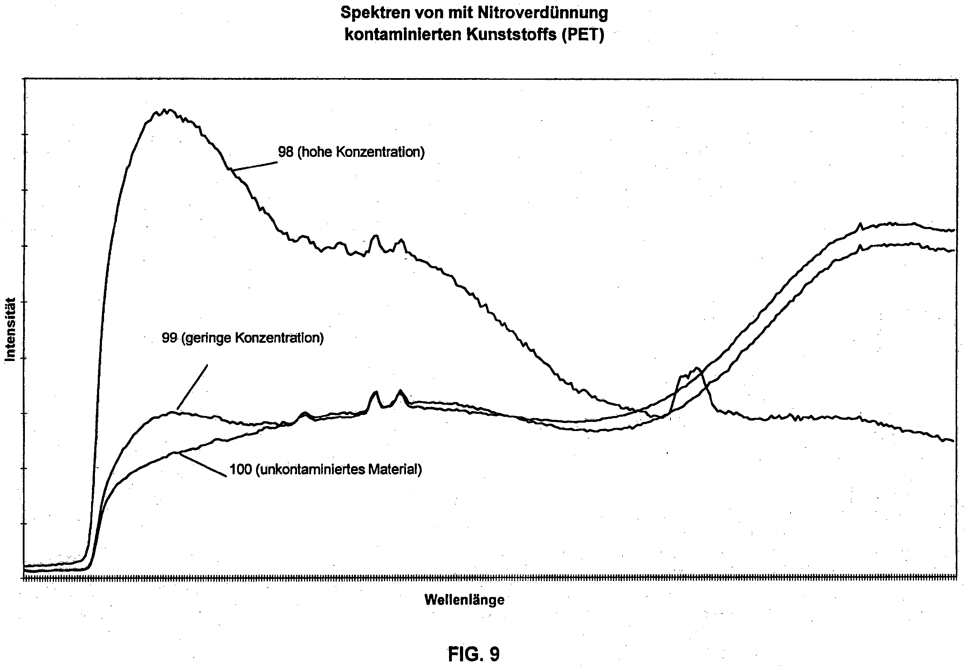

Die gemäß dem neuen Verfahren erhaltenen Spektren für Kontaminationen sind in Fig. 9 dargestellt. Am Beispiel von Nitroverdünnung zeigt Spektrum (98) eine hohe Kontaminationskonzentration, wohingegen Spektrum (99) eine relativ niedrige Kontaminationskonzentration in PET-Grundmaterial wiedergibt. Zum Vergleich zeigt das Spektrum (100) das unkontaminierte Basismaterial PET.

## Patentansprüche

1. Verfahren zur Detektion und Unterscheidung der Grundmaterialien (94, 95, 96, 97), der Farben (90, 91, 92, 93) und der Kontaminationen (98, 99, 100) in granulatähnlichen oder tablettenförmigen Stoffen (3), wobei die Stoffe (3) mit einem Laser (1) zeilenförmig bestrahlt und optisch angeregt werden, wobei das von den Stoffen (3) reemittierte Licht (10) zur Detektion der Unterscheidung sowohl der Grundmaterialien (94, 95, 96, 97) als auch der Farben (90, 91, 92, 93) und der Kontaminationen (98, 99, 100) erfasst und spektroskopisch analysiert (11, 12) wird und die Stoffe (3) nach Grundmaterialien (94, 95, 96, 97), Farben (90, 91, 92, 93) und/oder Kontaminationen (98, 99, 100) klassifiziert und separiert werden, und wobei das reemittierte Licht (10) koaxial und entgegengesetzt zu dem Licht des Lasers (1) verläuft und das Licht des Lasers (1) und das reemittierte Licht (10) über ein gemeinsames reflektierendes Polygonrad (18, 35) verlaufen, wobei das spektral zerlegte Licht durch eine Multianoden-Photomultiplier-Röhre (72) als Spektrum erfasst wird und die Stoffanalyse, die Farbbestimmung und die Kontaminanten-Erkennung
a) über eine Signalaufbereitung (73), eine programmierte Logik (75) und über mathematische Algorithmen (79) mit Kalibrationsvektoren (80) oder
b) über einen Prozessor (86) mit Zugriff auf Referenzspektren, die in einem Datenspeicher (87) enthalten sind, erfolgen.

2. Verfahren nach Anspruch 1, **dadurch gekennzeichnet, dass** die Beleuchtung der Stoffe (3) sowie die Erfassung des reemittierten Lichts (10) über eine optische Anordnung bestehend aus dem reflektierenden Polygonrad (18, 35) und einem Toroidalhohlspiegel (21, 55) erfolgen.

3. Verfahren nach Anspruch 1 bis 2, **dadurch gekennzeichnet, dass** der Toroidalhohlspiegel (21, 55) aus mehreren Einzelsegmenten (60, 61) zusammengesetzt ist.

4. Vorrichtung zur Detektion und Unterscheidung der Grundmaterialien (94, 95, 96, 97), der Farben (90, 91, 92, 93) und der Kontaminationen (98, 99, 100) in granulatähnlichen oder tablettenförmigen Stoffen (3) mit einer einen Laser (1) aufweisenden Einrichtung zur zeilenförmigen Beleuchtung der Stoffe, einer Analyseeinrichtung zur spektroskopischen Analyse (11, 12) des von den Stoffen (3) reemittierten Lichts (10), und einer Separierungseinrichtung (81) zur Klassifizierung und Separierung der Stoffe nach Grundmaterialien (94, 95, 96, 97), Farben (90, 91, 92, 93) und/oder Kontaminationen (98, 99, 100), wobei die Analyseeinrichtung (12) ein optisches System (2) mit einem reflektierenden Polygonrad (18, 35) umfasst, und wobei
das optische System (2) derart ausgebildet ist, sodass der Strahlengang des reemittierten Lichtes (10) koaxial und entgegengesetzt zu dem Strahlengang des Lichts des Lasers (1) über das reflektierende Polygonrad (18, 35) verläuft, und wobei eine Multianoden-Photomultiplier-Röhre (72) angeordnet ist zur Erfassung des spektral zerlegten Lichts als Spektrum und wobei die Vorrichtung
a) Mittel zur Signalaufbereitung (73) und Mittel mit einer programmierbaren Logik (75) und mathematischen Algorithmen (79) mit Kalibrationsvektoren (80) umfasst, wobei die Stoffanalyse, die Farbbestimmung und die Kontaminanten-Erkennung über die Signalaufbereitung (73), die programmierte Logik (75) und über die mathematischen Algorithmen (79) mit Kalibrationsvektoren (80) erfolgen oder wobei die Vorrichtung
b) einen Prozessor (86) und einen Datenspeicher (87), enthaltend Referenzspektren, auf den der Prozessor (86) Zugriff hat, umfasst, und wobei die Stoffanalyse, die Farbbestimmung und die Kontaminanten-Erkennung über den Prozessor (86) mit Zugriff auf Referenzspektren, die in dem Datenspeicher (87) enthalten sind, erfolgen.

## Claims

1. Method for detecting and differentiating between basic materials (94, 95, 96, 97), colours (90, 91, 92, 93) and contaminated parts (98, 99, 100) in granulate or pellet-like substances (3), wherein the substances (3) are linearly irradiated and optically excited by means of a laser (1), wherein the light re-emitted by the substances (3) is detected and spectroscopically analysed (11, 12) in order to detect the difference between the basic materials (94, 95, 96, 97) and the colours (90, 91, 92, 93) and contaminated parts (98, 99, 100), and the substances (3) are classified and sorted by basic materials (94, 95, 96, 97), colours (90, 91, 92, 93) and/or contaminated parts (98, 99, 100), and wherein the re-emitted light (10) extends coaxially with and counter to the light from the laser (1) and the light from the laser (1) and the re-emitted light (10) extend via a common reflecting polygonal wheel (18, 35), wherein the spectrally decomposed light is detected by a multi-anode photomultiplier tube (72) as a spectrum, and the substance analysis, the colour determination and the contaminant identification take place
a) by means of signal processing (73), programmed logic (75) and by means of mathematical algorithms (79) having calibration vectors (80), or
b) by means of a processor (86) having access to reference spectra contained in a data store (87).

2. Method according to claim 1, **characterised in that** the substances (3) are illuminated and the re-emitted light (10) is detected by means of an optical arrangement consisting of the reflecting polygonal wheel (18, 35) and a concave toroidal mirror (21, 55).

3. Method according to claims 1 to 2, **characterised in that** the concave toroidal mirror (21, 55) is made up of a plurality of individual segments (60, 61).

4. Device for detecting and differentiating between the basic materials (94, 95, 96, 97), the colours (90, 91, 92, 93) and the contaminated parts (98, 99, 100) in granulate or pellet-like substances (3) using an apparatus, which comprises a laser (1), for linear illumination of the substances, an analysis apparatus for spectroscopic analysis (11, 12) of the light (10) re-emitted by the substances (3), and a sorting apparatus (81) for classifying and sorting the substances by basic materials (94, 95, 96, 97), colours (90, 91, 92, 93) and/or contaminated parts (98, 99, 100), wherein the analysis apparatus (12) comprises an optical system (2) having a reflecting polygonal wheel (18, 35), and wherein
the optical system (2) is designed such that the beam path of the re-emitted light (10) extends coaxially with and counter to the beam path of the light from the laser (1) via the reflecting polygonal wheel (18, 35), and wherein a multi-anode photomultiplier tube (72) is arranged for detecting the spectrally decomposed light as a spectrum and wherein the device
a) comprises means for signal processing (73) and means having programmable logic (75) and mathematical algorithms (79) having calibration vectors (80), wherein the substance analysis, the colour determination and the contaminant identification take place by means of the signal processing (73), the programmed logic (75) and the mathematical algorithms (79) having calibration vectors (80), or wherein the device
b) comprises a processor (86) and a data store (87), containing reference spectra to which the processor (86) has access, and wherein the substance analysis, colour determination and the contaminant identification take place by means of the processor (86) that has access to reference spectra contained in the data store (87).

## Revendications

1. Procédé permettant de détecter et de différencier les matériaux de base (94, 95, 96, 97), les teintes (90, 91, 92, 93) et les contaminations (98, 99, 100) dans des substances (3) de type granulaire ou sous forme de pastilles, les substances (3) étant irradiées en forme de lignes et excitées optiquement avec un laser (1), la lumière (10) réémise par les substances (3) étant captée et analysée (11, 12) par voie spectroscopique pour la détection de la différence aussi bien des matériaux de base (94, 95, 96, 97) que des teintes (90, 91, 92, 93) et des contaminations (98, 99, 100), et les substances (3) étant classées et séparées selon les matériaux de base (94, 95, 96, 97), les teintes (90, 91, 92, 93) et/ou les contaminations (98, 99, 100), et la lumière (10) réémise étant coaxiale et opposée à la lumière du laser (1), et la lumière du laser (1) et la lumière (10) réémise passant par une roue polygonale (18, 35) réfléchissante commune, la lumière décomposée spectralement étant captée en tant que spectre par un tube photomultiplicateur multi-anode (72), et l'analyse des substances, la détermination des teintes et l'identification des contaminants
a) s'effectuant par le biais d'un traitement de signal (73), d'une logique (75) programmée et par le biais d'algorithmes mathématiques (79) avec des vecteurs d'étalonnage (80) ou
b) par le biais d'un processeur (86) avec accès à des spectres de référence qui sont contenus dans une mémoire de données (87).

2. Procédé selon la revendication 1, caractérisé en que l'éclairage des substances (3) ainsi que la captation de la lumière (10) réémise s'effectuent par le biais d'un dispositif optique composé de la roue polygonale (18, 35) réfléchissante et d'un miroir concave toroïdal (21, 55).

3. Procédé selon les revendications 1 à 2, caractérisé en que le miroir concave toroïdal (21, 55) se compose de plusieurs segments individuels (60, 61).

4. Dispositif permettant de détecter et de différencier les matériaux de base (94, 95, 96, 97), les teintes (90, 91, 92, 93) et les contaminations (98, 99, 100) dans des substances (3) de type granulaire ou sous forme de pastilles avec un équipement présentant un laser (1) pour l'éclairage en forme de lignes des substances, un équipement d'analyse pour l'analyse spectroscopique (11, 12) de la lumière (10) réémise par les substances (3), et un équipement de séparation (81) pour la classification et la séparation des substances selon des matériaux de base (94, 95, 96, 97), des teintes (90, 91, 92, 93) et/ou des contaminations (98, 99, 100), l'équipement d'analyse (12) comprenant un système optique (2) avec une roue polygonale (18, 35) réfléchissante, et
le système optique (2) étant constitué de telle sorte que le trajet de rayonnement de la lumière (10) réémise est coaxial et opposé au trajet de rayonnement de la lumière du laser (1) via la roue polygonale (18, 35) réfléchissante, et un tube photomultiplicateur multi-anode (72) étant disposé pour la captation de la lumière décomposée spectralement en tant que spectre, et le dispositif
a) comprenant des moyens de traitement du signal (73) et des moyens avec une logique (75) programmable et des algorithmes mathématiques (79) avec des vecteurs d'étalonnage (80), l'analyse des substances, la détermination des couleurs et l'identification des contaminants s'effectuant par le biais du traitement du signal (73), de la logique (75) programmée et par le biais des algorithmes mathématiques (79) avec des vecteurs d'étalonnage (80), et le dispositif
b) comprenant un processeur (86) et une mémoire de données (87), contenant des spectres de référence, à laquelle le processeur (86) a accès, et l'analyse des substances, la détermination des couleurs et l'identification des contaminants s'effectuant par le biais du processeur (86) ayant accès à des spectres de référence qui sont contenus dans la mémoire de données (87).
